# EUROPÄISCHE PATENTSCHRIFT

(11) **EP 3 112 821 B1**
(45) Veröffentlichungstag und Bekanntmachung des Hinweises auf die Patenterteilung: **02.05.2018**
(21) Anmeldenummer: 15175162.5
(22) Anmeldetag: 02.07.2015
(51) Int. Cl.: G01F 23/284, G01S 13/88, G01S 7/40, G01S 13/08, G01S 13/58

(54) **VERFAHREN ZUR FÜLLSTANDMESSUNG UND FÜLLSTANDMESSGERÄT**
METHOD AND DEVICE FOR FILL LEVEL MEASUREMENT
PROCEDE ET APPAREIL DE MESURE DE NIVEAU DE REMPLISSAGE

(43) Veröffentlichungstag der Anmeldung: 04.01.2017
(73) Patentinhaber: VEGA Grieshaber KG, 77709 Wolfach (DE)
(72) Erfinder: Corbe, Bernhard, 77746 Schutterwald (DE); Fischer, Michael, 72275 Alpirsbach (DE); Kaufmann, Manuel, 77723 Gengenbach (DE)
(74) Vertreter: Westphal, Mussgnug & Partner Patentanwälte mbB

(56) Entgegenhaltungen:
- EP-A1- 2 527 804
- EP-A1- 2 824 431
- DE-A1-102008 016 940
- US-A- 5 420 591

## Beschreibung

Die Erfindung betrifft ein Verfahren zur Füllstandmessung und ein Füllstandmessgerät.

Die Überwachung der Füllstände von Füllgütern, z.B. Flüssigkeiten oder Schüttgütern, in Behältern ist in der heutigen industriellen Produktion, in der oft hochgradig automatisierte Prozesse und geringe Lagerhaltung zur Steigerung der Kosteneffizienz wesentlich beitragen, in vielen Anwendungsgebieten zu einer Standardmaßnahme geworden. Hoher Beliebtheit erfreuen sich dabei insbesondere Verfahren zur Füllstandmessung bzw. Füllstandmessgeräte, die unter Verwendung von Radarsensoren arbeiten, mit denen eine Echokurve gemessen und ausgewertet wird und daraus der Füllstand abgeleitet wird. Anzumerken ist dabei, dass der Begriff des Radarsensors, wie er in dieser Offenbarung angewendet wird, nicht zwingend auf ein reines Detektorelement, das naturgemäß einen Signalausgang oder eine Kommunikationsschnittstelle benötigt, beschränkt ist. Ein Radarsensor im Sinne dieser Offenbarung kann also auch eine aktive Baugruppe zum Aussenden des Radarsignals und/oder eine elektronische Steuerung umfassen.

Das Grundprinzip einer solchen Messung besteht dabei darin, dass ein Signal in den Behälter abgestrahlt und z.B. die Laufzeitverteilung der reflektierten Radarechos aufgezeichnet wird, wodurch sich insbesondere Rückschlüsse auf den Abstand der Füllgutoberfläche vom Radarsensor ziehen lassen. Dies erfolgt in der Regel automatisiert durch eine Auswerteelektronik, die nach definierten Kriterien die Füllgutoberfläche einer Struktur in der Echokurve zuordnet und aus der Lage dieser Struktur einen Füllstand berechnet. Die Auswerteelektronik muss nicht zwingend als separates Bauteil ausgeführt sein, sondern sie kann auch in den Radarsensor, insbesondere dessen elektronische Steuerung, integriert sein

Probleme entstehen mit diesem Ansatz allerdings immer dann, wenn nicht gewährleistet ist, dass tatsächlich die richtige Struktur in der Echokurve durch die Auswerteelektronik identifiziert wird. Besonders deutlich treten diese Probleme beispielsweise dann zu Tage, wenn als Konsequenz aus der Behältergeometrie der Radarsensor so angeordnet werden muss, dass bei einer Befüllung des Behälters nicht vermieden werden kann, dass der Füllgutstrom in den Abstrahlbereich des Senders des Radarsensors, der die Radarstrahlen emittiert, eindringt oder diesen durchquert. Dies führt unweigerlich dazu, dass in der Echokurve eine zusätzliche Struktur entsteht, die, insbesondere dann, wenn sie ähnlich stark oder sogar stärker ausgeprägt als die durch die wahre Füllgutoberfläche hervorgerufene Struktur der Echokurve ist, von der Auswerteelektronik fälschlicherweise als Füllgutoberfläche identifiziert wird, was naturgemäß zu einer drastisch verfälschten Füllstandangabe führt.

Um solche Probleme zu vermeiden ist aus der EP 1 283 412 B1 ein Verfahren zum Erfassen eines Befüllvorgangs bekannt, bei dem die Echokurve durch eine Auswerteelektronik darauf überprüft wird, ob sie innerhalb eines Erwartungsbereichs liegt und auf das Vorliegen eines Befüllvorgangs geschlossen wird, wenn dies nicht der Fall ist. Damit gelingt es aber lediglich, zwischen aussagekräftigen Messergebnissen ohne Befüllvorgang und nicht aussagekräftigen Messergebnissen während des Befüllvorgangs zu unterscheiden.

Aus der EP 2 824 431 A1 ist es bekannt, Fließgeschwindigkeit und Abstand zu einem strömenden Medium mit Hilfe von Dopplerverfahren zu ermitteln.

Aus der EP 2 527 804 A1 ist ein Verfahren zur Erkennung von Mehrfach- und Bodenechos bekannt, bei dem mit mindestens einem Radarsensor und mindestens einer Auswerteelektronik eine Echokurve und ein Doppler-Frequenzspektrum aufgenommen werden, wobei das Doppler-Frequenzspektrum durch die Auswerteelektronik ausgewertet wird und die Ergebnisse dieser Auswertung bei der Auswertung der Echokurve durch die Auswerteelektronik zur Bestimmung von Mehrfachechos verwendet wird.

Die Aufgabe der Erfindung besteht daher darin, ein verbessertes Verfahren zur Füllstandmessung und ein Füllstandmessgerät bereitzustellen, mit welchen die Auswertung der Echokurve an die aktuell herrschenden Bedingungen-beispielsweise einen gerade ablaufenden Befüllvorgang, aber auch eine Entleerung oder den Betrieb eines Rührwerks- angepasst werden können.

Diese Aufgabe wird gelöst durch ein Verfahren zur Füllstandmessung mit den Merkmalen des Patentanspruchs 1 und ein Füllstandmessgerät mit den Merkmalen des Patentanspruchs 10. Vorteilhafte Weiterbildungen der Erfindung sind Gegenstand der abhängigen Patentansprüche.

Das erfindungsgemäße Verfahren zur Messung des Füllstands eines Füllguts, das sich beispielsweise im Inneren eines Behälters befinden kann, mit mindestens einem Radarsensor und mindestens einer Auswerteelektronik umfasst mindestens die Schritte Aufnahme einer Echokurve, Aufnahme eines Doppler-Frequenzspektrums, Auswertung des Doppler-Frequenzsspektrums durch die Auswerteelektronik, und Auswertung der Echokurve durch die Auswerteelektronik unter Berücksichtigung der Ergebnisse der Auswertung des Doppler-Frequenzspektrums durch die Auswerteelektronik. Es basiert auf der Erkenntnis der Erfinder, dass aus den Doppler-Frequenzspektren automatisiert detaillierte Informationen über die aktuell vorliegenden Bedingungen extrahiert werden können, mit denen die Auswertung der Echokurve durch die Auswerteelektronik signifikant verbessert werden kann.

Anzumerken ist, dass sich unterschiedlichste Radartechnologien, Radarsignale und Modulationsformen einsetzen lassen, beispielsweise Pulsradar, FMCW-Radar, Puls-Doppler-Radar, Pulskompressionsradar, FSK-Radar und Dauerstrichradar.

In einer bevorzugten Weiterbildung des Verfahrens ist vorgesehen, dass bei der Auswertung des Doppler-Frequenzspektrums durch die Auswerteelektronik bestimmt wird, ob die Füllgutoberfläche sich verändert, beispielsweise, weil in dem Behälter ein Rührgerät aktiv ist. Da eine solche Veränderung mit einer Bewegung von Schüttgutpartikeln oder Bestandteilen von Flüssigkeiten einhergeht, ist das Doppler-Frequenzspektrum, das Geschwindigkeitsinformationen enthält, zur Identifikation einer solchen Bewegung geeignet. Diese können insbesondere dann, wenn die Auswerteelektronik auch auf Informationen zum Füllgut zurückgreifen kann, beispielsweise genutzt werden, um die Effekte eines in einer Flüssigkeit aktiven Rührwerks, z.B. die Ausbildung einer parabolischen Oberfläche, bei der Bestimmung des Füllstands aus der Echokurve zu berücksichtigen.

Gemäß einer weiteren bevorzugten Weiterbildung des Verfahrens wird das Doppler-Frequenzspektrum einschließlich der darin enthaltenen Geschwindigkeitsinformation benutzt, um zu bestimmen, ob ein Zufluss oder Abfluss von Füllgut erfolgt. Diese Information kann nicht nur verwendet werden, um Pegelstandsinformationen aus der Echokurve als möglicherweise durch den Befüllvorgang verfälscht zu qualifizieren, sondern auch dazu, um die mögliche Beeinflussung von Pegelstandsinformationen aus der Echokurve zu korrigieren oder durch eine hierauf basierende Schätzung der Zu- oder Abflussrate eine Schätzung des tatsächlichen aktuellen Pegelstands ausgehend von dem letzten unverfälschten Pegelstand zu ermöglichen.

Insbesondere werden erfindungsgemäß in Abhängigkeit von den Ergebnissen der Auswertung des Doppler-Frequenzspektrums bei der Auswertung der Echokurve durch die Auswerteelektronik verwendete Mittelungsfaktoren dynamisch angepasst.

Insbesondere in Fällen, in denen ein Füllstrom beim Befüllen des Behälters in den Überwachungsbereich des Radarsensors, d.h. in den Abstrahlbereich der Antenne des Radarsensors, eingreift, so dass in der Echokurve eine dem Füllstrom zuzuordnende Struktur auftritt, kann ein Hinweis aus dem Doppler-Frequenzspektrum, dass ein solcher Füllstrom vorhanden ist, verwendet werden, um die Identifikation der Struktur in der Echokurve, der der Füllstand des Füllguts zugeordnet wird, zu beeinflussen. Beispielsweise kann das in vielen Fällen funktionierende Kriterium, die Struktur der Echokurve, die die höchste Amplitude aufweist, mit dem Füllstand in Verbindung zu bringen zu falschen Resultaten führen, wenn ein starker Füllgutzustrom im Überwachungsbereich des Radarsensors vorhanden ist. Durch Ersetzen bzw. Ergänzen dieses Kriteriums mit einer Zusatzbedingung können die Strukturen, die sprunghaft in der Echokurve auftauchen, als mögliche Kandidaten für den Füllstand ausgeschlossen werden.

Besonders bevorzugt ist es, wenn die Echokurve und das Doppler-Frequenzspektrum gleichzeitig aufgenommen werden, da dann beide Messungen in demselben Zustand des Systems vorgenommen werden. Bei einigen der gängigen Radartechnologien und Modulationsformen erzwingt dies, dass die Echokurve und das Doppler-Frequenzspektrum mit unterschiedlichen Radarsensoren aufgenommen werden. Dies kann aber auch Vorteile mit sich bringen, wenn grundsätzlich die Verwendung eines einzelnen Radarsensors möglich wäre.

Bevorzugt ist ferner, wenn in einem Zufluss oder Abfluss ein Durchflussmesser angeordnet ist, dessen Messwert der Signalauswertung im Radarsensor als zusätzliche Eingangsgröße zur Verfügung steht.

Das erfindungsgemäße Füllstandmessgerät hat mindestens einen Radarsensor und mindestens eine Steuer- und Auswerteelektronik, die allerdings auch aus mehreren Komponenten zusammmengesetzt sein kann. Es zeichnet sich dadurch aus, dass die Steuer- und Auswertelektronik zur Durchführung eines Verfahrens nach einem der Ansprüche 1 bis 8 eingerichtet ist. Dies kann insbesondere dadurch sichergestellt sein, dass ein Prozessor der Steuer- und Auswerteelektronik ein in einem Speicher hinterlegtes Programm abarbeitet, das zur Durchführung des Verfahrens führt, also die Messung von Echokurven und Doppler-Frequenzspektren durch entsprechende Ansteuerung eines zum Radarsensor gehörenden Radarsenders durchführt und die mit dem Radardetektor des Radarsensors gemessenen Daten als Echokurve bzw. Doppler-Frequenzspektrum analysiert, wobei aus der Analyse des Doppler-Frequenzspektrums Parameter gewonnen werden, die die Auswerteelektronik dann bei der Auswertung der Echokurve einsetzt.

Die Erfindung wird nachfolgend anhand von exemplarischen Figuren näher erläutert. Es zeigen:
- Fig.1:: Einen Behälter mit Radarsensor, in den Füllgut einströmt,
- Fig.2:: ein erstes Beispiel für eine Echokurve, wie sie mit einer in Fig. 1 gezeigten Anordnung gemessen werden könnte,
- Fig.3:: ein zweites Beispiel für eine Echokurve, wie sie mit einer in Fig. 1 gezeigten Anordnung gemessen werden könnte,
- Fig.4:: einen Behälter mit zwei Radarsensoren, in den ein Füllgut einströmt,
- Fig.5:: eine alternative Ausgestaltung eines Behälters mit einem Radarsensor, in den ein Füllgut einströmt, wobei ein Durchflussmessgerät an einem Zulaufrohr angeordnet ist,
- Fig.6a:: ein Doppler-Frequenzspektrum bei einer ungestörten Füllgutoberfläche,
- Fig.6b:: ein Doppler-Frequenzspektrum bei einem Befüllstrom der aber außerhalb des Überwachungsbereichs des Radarsensors liegt, und
- Fig.6c:: ein Doppler-Frequenzspektrum bei einem Befüllstrom der in den Überwachungsbereich des Radarsensors eintritt,
- Fig.6d:: ein Doppler-Frequenzspektrum eines Behälters bei seiner Entleerung.

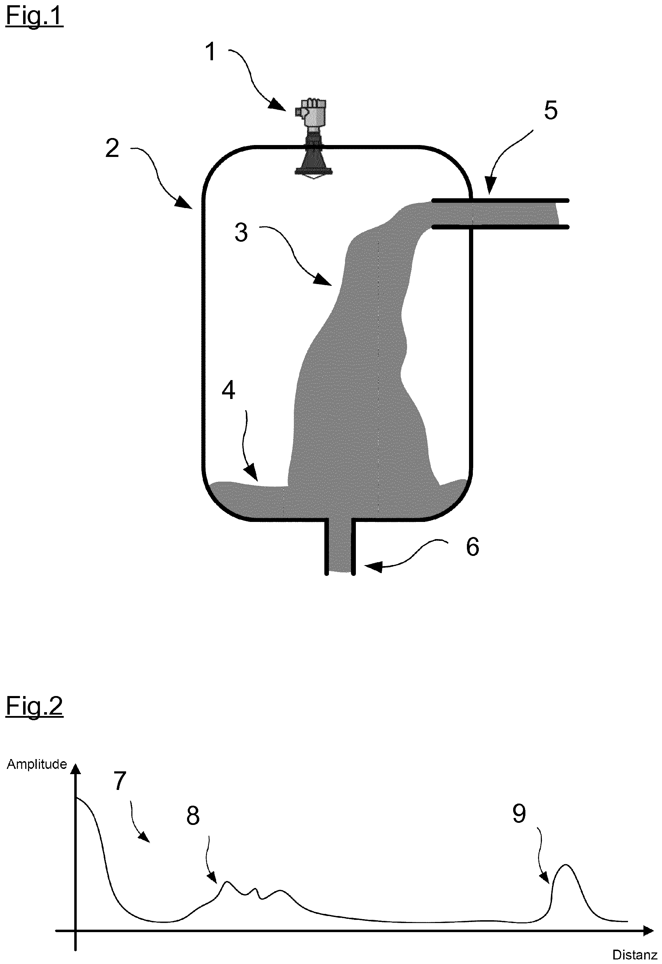

Figur 1 zeigt einen Radarsensor 1, der einen nicht dargestellten Radarsender, einen Radarempfänger sowie eine Steuer- und Auswerteelektronik umfasst. Der Radarsensor 1 ist an einem Behälter 2 mit Zulaufrohr 5 und Ablaufrohr 6 angeordnet und soll funktionsgemäß die Position einer Füllgutoberfläche 4 bestimmen um daraus einen Füllstand abzuleiten. Durch das Zulaufrohr 5 strömt in der dargestellten Situation ein Füllgutstrom 3 in den Behälter 2 ein, der in den Überwachungsbereich des Radarsensors 1 eintritt. Als Konsequenz aus der Anwesenheit des Füllgutstroms 3 treten Störechos auf, die je nach Lage und Amplitude die Bestimmung der Position der Füllgutoberfläche 4 beeinträchtigen können. Selbst in einer Einbausituation, in der der Füllgutstrom 3 außerhalb des durch den Abstrahlbereich des Radarsenders definierten Überwachungsbereichs des Radarsensors 1 liegt, kann es zu einer Beeinträchtigung der Positionsbestimmung kommen, z.B. wenn es sich bei dem Füllgut um eine Flüssigkeit handelt, so dass das Auftreffen des Füllgutstroms 3 auf die Füllgutoberfläche 4 zu Wellenbildung führt.

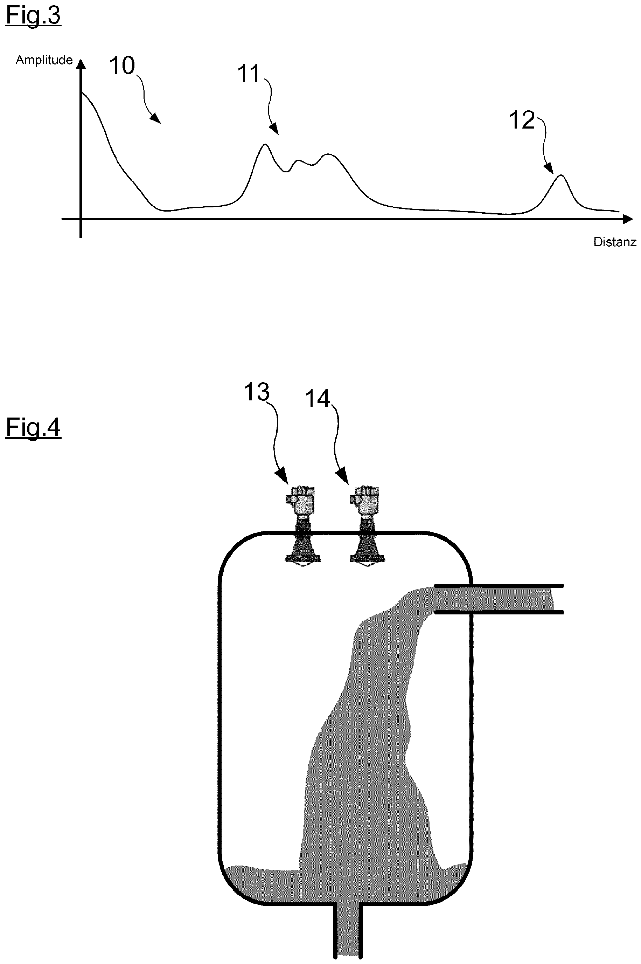

Fig. 2 zeigt eine typische Echokurve 7 während eines Befüllvorgangs. Die verteilten Echos 8 im vorderen Bereich der Kurve werden bei der Distanzmessung vom Befüllstrom verursacht. Das klar erkennbare einzelne Echo 9 im hinteren Bereich der Kurve 7 stellt das korrekte Füllstandecho dar. In dieser Situation wäre eine Trennung von Befüllstrom- und Füllgutecho in der Echokurve noch möglich, da die beiden Echos weit genug auseinander liegen und das Füllgutecho eine ausreichend große Amplitude besitzt. Problematisch wird es jedoch bei einer Echokurve 10 mit einem Verlauf, wie er beispielsweise in Fig. 3 zu sehen ist. Hier dominieren die verschiedenen Störechos 11 des Befüllstroms in der Amplitude im Vergleich zum Füllgutecho 12. Hält der Befüllvorgang an, so kann die Signalauswertung nicht längere Zeit auf dem korrekten Füllgutecho 12 verweilen. Die Auswerteelektronik wird sich vielmehr nach einiger Zeit für eines der größeren, unerwünschten Befüllstromechos 11 entscheiden und somit einen falschen Füllstand ausgeben.

Liegen das unerwünschte Störecho des Befüllstroms und das Füllgutecho nahe genug beieinander, so kann auch eine kleinere Störechoamplitude die Kurvenform und somit die Position des Füllgutechos verändern und zu Distanzfehlern führen.

Die erfindungsgemäße Lösung der beschriebenen Problematik zielt nun darauf ab, mit Hilfe einer Dopplermessung jegliche dynamische Veränderung innerhalb des Behälters zu detektieren und damit Fallentscheidungen für die Signalverarbeitung bezüglich der zu ermittelten Distanzmessung zu liefern. Die Dopplermessung bzw. die Auswertung der Dopplerverschiebung auf dem empfangenen Radarsignal liefert die Geschwindigkeiten, mit denen sich Teile des Inhalts des Behälters bewegen. Insbesondere kann aus dem empfangenen Radarsignal ein Dopplerspektrum berechnet werden, welches die Verteilung der im Behälter gemessenen Dopplerfrequenzen und damit auch die Geschwindigkeiten darstellt. Es besteht ein linearer Zusammenhang zwischen Dopplerfrequenz und Geschwindigkeit.

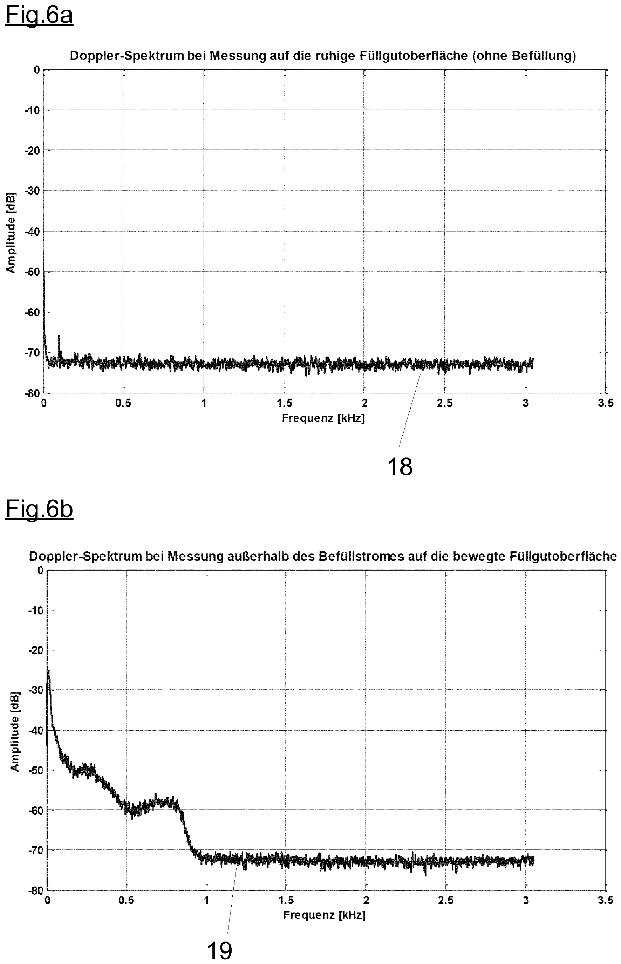

Wie insbesondere die Figuren 6a bis 6d zeigen, kann das Doppler-Frequenzspektrum die wesentlichen, voneinander zu unterscheidenden Szenarien identifizieren.

In Figur 6a ist ein Doppler-Frequenzspektrum 18 gezeigt, das von einer ungestörten Füllgutoberfläche 4 stammt. Das Spektrum ist strukturlos und stellt lediglich das elektronische Grundrauschen des entsprechenden Empfängers dar; dementsprechend gibt es keinerlei Notwendigkeit, die Auswertung der Echokurve in dieser Situation zu ändern.

In Figur 6b ist ein Doppler-Frequenzspektrum 19 gezeigt, wie man es erhält, wenn eine Befüllung oberhalb der Niveaulinie des Füllgutes stattfindet, z.B. durch das Zulaufrohr 5 in Fig. 1. Das abgestrahlte Radarsignal sei hier jedoch, anders als in Fig 1 dargestellt, außerhalb des Befüllstromes, angeordnet. Es entstehen somit keine Störechos. Dies ist insbesondere bei Behältern mit großem Durchmesser durchaus der Fall.

Hier wird man über die Wellenbildung im Behälter und die damit verbundene unruhigere Füllgutoberfläche ein im Vergleich zur ruhigen Füllgutoberfläche verändertes Dopplerspektrum detektieren. Somit ist auch in diesem Fall wiederum die Detektion eines Befüllvorganges möglich, was wiederum der Signalverarbeitung für die Distanzmessung als Zusatzinformation dienen kann. Dies gilt natürlich auch, wenn Rührwerke oder andere Einbauten im Behälter aktiv sind, die sich störend auf eine glatte Füllgutoberfläche auswirken.

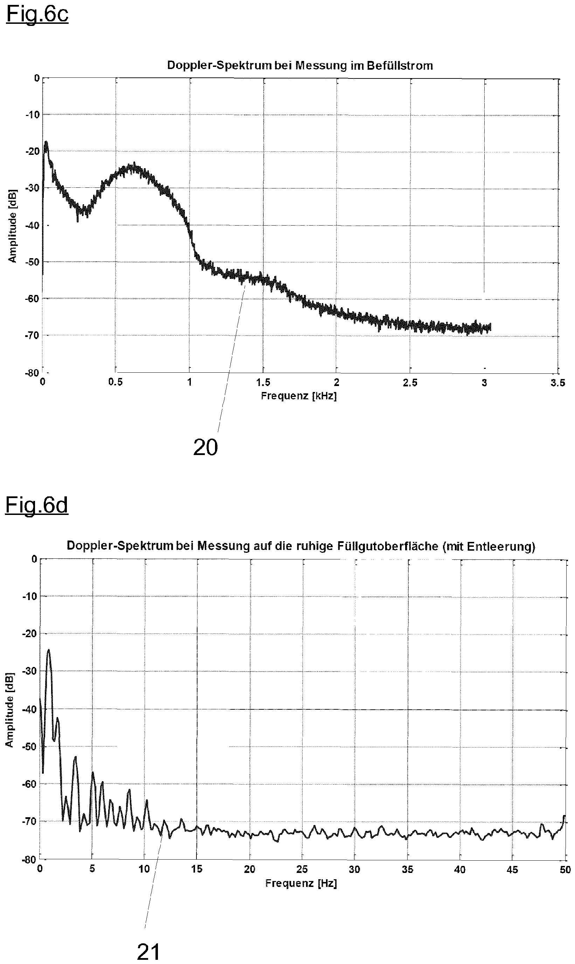

In Figur 6c ist ein Doppler-Frequenzspektrum 20 gezeigt, wie man es in der in Fig. 1 dargestellten Situation erhält, deren zugehörige Echokurve 7 in Fig. 2 dargestellt ist. Es kommt in der Echokurve zu einer gleichzeitigen Distanzmessung zur Füllgutoberfläche und zum Befüllstrom; diese Situation wird aber durch die Dopplerauswertung sicher erkannt. Die spektrale Frequenzverteilung des schnell fallenden Füllguts unterscheidet sich nämlich deutlich vom Frequenzspektrum von der relativ dazu langsamen Füllstandänderung der Niveaulinie. Somit kann verhindert werden, dass sich die Echoauswertung für das eventuell entstehende größere Störecho 11 wie in der Echokurve 10 in Fig. 3 gezeigt, entscheidet und somit einen falschen Distanzwert zur Füllgutoberfläche liefert.

In Figur 6d ist ein Doppler-Frequenzspektrum 21 gezeigt, wie man es erhält, wenn eine Befüllung oder Entleerung unterhalb der Niveaulinie des Füllgutes stattfindet, beispielsweise durch das Ablaufrohr 6 in Fig. 1, so dass das abgestrahlte Radarsignal zur Distanzmessung nicht durch einen Befüllstrom gestört wird. In diesem Szenario wird davon ausgegangen, dass die Füllgutoberfläche bei der Befüllung oder Entleerung des Behälters durch das Rohr 6 in Ruhe bleibt, d.h. keine signifikanten Wellen an der Füllgutoberfläche entstehen. Es werden sich folglich keine zusätzlichen unerwünschten Störechos auf der Echokurve ergeben. Die Dopplermessung liefert hier als Zusatzinformation die Geschwindigkeit mit der sich die Niveaulinie des Füllgutes bewegt. Damit können beispielsweise bei schnellen Änderungen des Füllstandniveaus Mittelungsfaktoren der Distanzmessung dynamisch angepasst werden. Je nach Geschwindigkeit der Füllstandänderung kann weiterhin eine zeitliche Vorhersage getroffen werden, wann der Behälter komplett entleert oder gefüllt ist oder ein bestimmtes Niveau erreicht wird.

Für die Füllstandmessung und Dopplerauswertung des zu vermessenden Szenarios, lassen sich unterschiedlichste Radartechnologien, Radarsignale und Modulationsformen einsetzten. Einige übliche Verfahren zur Füllstandmessung und/oder Dopplerauswertung sind beispielsweise Pulsradar, FMCW-Radar, Puls-Doppler Radar, Pulskompressionsradar, FSK-Radar (FSK = Frequency Shift Keying) und Dauerstrichradar (auch CW-Radar, CW = continuous wave). Diese Aufzählung ist als nicht abschließend anzusehen. Viele weitere Radartechnologien, insbesondere auch Mischformen, sind in diesem Zusammenhang anwendbar.

Die aufgezählten Radartechnologien und Modulationsformen lassen die Füllstandmessung und Dopplerauswertung auf verschiedenste Arten zu. Beispielsweise kann bei einigen Modulationsformen und Radartechnologien eine gleichzeitige Messung von Distanz und Geschwindigkeit bzw. der Dopplerverschiebung des Empfangssignals durchgeführt werden. Andere Modulationsformen erlauben wiederum nur eine sequenzielle Abfolge von Distanzmessung und Dopplerauswertung. Mit einem reinen Dauerstrichradar lässt sich beispielsweise lediglich eine Dopplerauswertung aber keine Distanzmessung durchführen.

In Fig. 4 ist ein Szenario skizziert, in welchem der Radarsensor 13 beispielsweise ausschließlich für die Füllstandmessung und Radarsensor 14 ausschließlich für die Geschwindigkeitsmessung verwendet wird. Die Messungen werden hier vorzugsweise gleichzeitig durchgeführt.

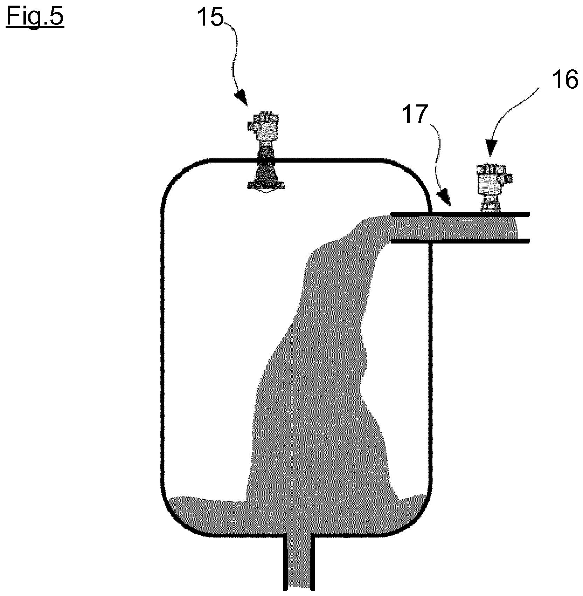

Wird das Füllstandecho wegen der räumlichen Nähe zum unerwünschten Störecho des Befüllstroms bereits beeinträchtigt, kann die erwartete Distanz zur Füllgutoberfläche auch über eine zusätzliche Messung, beispielsweise des Durchflusses, wie in Fig. 5 angedeutet, bestimmt werden. Hier befindet sich ein Durchflussmesser 16 im Zulauf 17 des Behälters, dessen gemessener Durchflusswert der Signalauswertung als Eingangsgröße zur Verfügung steht. Über die Behältergeometrie und den bekannten Zufluss kann somit die aktuelle Füllguthöhe mit Hilfe von geeigneten Algorithmen geschätzt werden, auch wenn während des Befüllens kein zuverlässiger Füllstandwert vom Radarsensor 15 gemessen werden kann.

### Bezugszeichenliste

1 Radarsensor
2 Behälter
3 Füllgutstrom
4 Füllgutoberfläche
5 Zulaufrohr
6 Ablaufrohr
7 Echokurve
8 Störecho
9 Füllgutecho
10 Echokurve
11 Störecho
12 Füllgutecho
13 Radarsensor
14 Radarsensor
15 Radarsensor
16 Durchflusssensor
17 Zulauf
18 Doppler-Frequenzspektrum
19 Doppler-Frequenzspektrum
20 Doppler-Frequenzspektrum
21 Doppler-Frequenzspektrum

## Patentansprüche

1. Verfahren zur Messung des Füllstands eines Füllguts mit mindestens einem Radarsensor (1, 13-15) und mit mindestens einer Auswerteelektronik mit den Schritten
- Aufnahme einer Echokurve (7,10),
- Aufnahme eines Doppler-Frequenzspektrums(18-21),
- Auswertung des Doppler-Frequenzsspektrums(18-21) durch die Auswerteelektronik, und
- Auswertung der Echokurve (7,10) durch die Auswerteelektronik ,
**dadurch gekennzeichnet, dass** in Abhängigkeit von den Ergebnissen der Auswertung des Doppler-Frequenzspektrums (18-21) bei der Auswertung der Echokurve (7, 10) durch die Auswerteelektronik verwendete Mittelungsfaktoren der Distanzmessung dynamisch angepasst werden.

2. Verfahren nach Anspruch 1,
**dadurch gekennzeichnet, dass** bei der Auswertung des Doppler-Frequenzspektrums (18-21) durch die Auswerteelektronik bestimmt wird, ob sich die Füllgutoberfläche (4) bewegt.

3. Verfahren nach Anspruch 2,
**dadurch gekennzeichnet, dass** bei der Auswertung des Doppler-Frequenzspektrums (18-21) durch die Auswerteelektronik bestimmt wird, mit welcher Geschwindigkeit sich die Füllgutoberfläche bewegt.

4. Verfahren nach Anspruch 1, 2 oder 3,
**dadurch gekennzeichnet, dass** bei der Auswertung des Doppler-Frequenzspektrums (18-21) durch die Auswerteelektronik bestimmt wird, ob ein Zufluss oder Abfluss von Füllgut erfolgt.

5. Verfahren nach einem der vorstehenden Ansprüche,
**dadurch gekennzeichnet, dass** in Abhängigkeit von den Ergebnissen der Auswertung des Doppler-Frequenzspektrums (18-21) bei der Auswertung der Echokurve (7,10) durch die Auswerteelektronik die Identifikation einer Struktur in der Echokurve (7,10), der der Füllstand des Füllguts zugeordnet wird, beeinflusst wird.

6. Verfahren nach einem der vorstehenden Ansprüche,
**dadurch gekennzeichnet, dass** die Echokurve (7,10) und das Doppler-Frequenzspektrum (18-21) gleichzeitig aufgenommen werden.

7. Verfahren nach einem der vorstehenden Ansprüche,
**dadurch gekennzeichnet, dass** die Echokurve (7,10) und das Doppler-Frequenzspektrum (18-21) mit unterschiedlichen Radarsensoren (13,14,15) aufgenommen werden.

8. Verfahren nach einem der vorherstehenden Ansprüche,
**dadurch gekennzeichnet, dass** in einem Zufluss oder Abfluss ein Durchflussmesser angeordnet ist, dessen Messwert der Signalauswertung im Radarsensor als zusätzliche Eingangsgröße zur Verfügung steht.

9. Füllstandmessgerät mit mindestens einem Radarsensor (1,13-15) und einer Steuer- und Auswerteelektronik,
**dadurch gekennzeichnet, dass** die Steuer- und Auswertelektronik zur Durchführung eines Verfahrens nach einem der Ansprüche 1 bis 8 eingerichtet ist.

## Claims

1. A method for measuring the filling level of a charge using at least one radar sensor (1, 13-15) and at least one piece of evaluation electronics, comprising the following steps:
- capturing an echo curve (7, 10),
- capturing a Doppler frequency spectrum (18-21),
- evaluating the Doppler frequency spectrum (18-21) by means of the evaluation electronics, and
- evaluating the echo curve (7, 10) using the evaluation electronics,
**characterised in that** as a function of the results of the evaluation of the Doppler frequency spectrum (18-21) during the evaluation of the echo curve (7, 10), averaging factors of the distance measurement as used by the evaluation electronics are dynamically adapted.

2. The method as claimed in claim 1,
**characterised in that** during the evaluation of the Doppler frequency spectrum (18-21) by the evaluation electronics it is determined whether the surface (4) of the charge is moving.

3. The method as claimed in claim 2,
**characterised in that** during the evaluation of the Doppler frequency spectrum (18-21) by the evaluation electronics it is determined at which speed the surface of the charge is moving.

4. The method as claimed in claim 1, 2 or 3,
**characterised in that** during the evaluation of the Doppler frequency spectrum (18-21) by the evaluation electronics it is determined whether an influx or an outflux of charge is taking place.

5. The method as claimed in any one of the preceding claims,
**characterised in that** as a function of the results of the evaluation of the Doppler frequency spectrum (18-21) during the evaluation of the echo curve (7, 10) by the evaluation electronics, the identification of the structure in the echo curve (7, 10), which is associated with the level of the charge, is influenced.

6. The method as claimed in any one of the preceding claims,
**characterised in that** the echo curve (7, 10) and the Doppler frequency spectrum (18-21) are captured at the same time.

7. The method as claimed in any one of the preceding claims,
**characterised in that** the echo curve (7, 10) and the Doppler frequency spectrum (18-21) are captured using different radar sensors (13, 14, 15).

8. The method as claimed in any one of the preceding claims,
**characterised in that** in an inlet or an outlet, a flow meter is provided, the measurement of which is available to the signal evaluation in the radar sensor as an additional input variable.

9. A filling level measurement device comprising at least one radar sensor (1, 13-15) and control and evaluation electronics, **characterised in that** the control and evaluation electronics is adapted for carrying out a method as claimed in any one of claims 1 to 8.

## Revendications

1. Procédé de mesure du niveau de remplissage d'un produit en vrac à l'aide d'au moins un capteur radar (1, 13-15) et d'au moins une électronique d'exploitation comprenant des étapes consistant à :
- établir une courbe d'écho (7, 10),
- établir un spectre de fréquence Doppler (18-21),
- exploiter le spectre de fréquence Doppler (18-21) par l'électronique d'exploitation, et
- exploiter la courbe d'écho (7, 10) par l'électronique d'exploitation,
**caractérisé en ce que**
en fonction des résultats de l'exploitation du spectre de fréquence Doppler (18-21), des facteurs d'établissement d'une moyenne de la mesure de distance utilisés lors de l'exploitation de la courbe d'écho (7, 10) par l'électronique d'exploitation sont adaptés dynamiquement.

2. Procédé conforme à la revendication 1,
**caractérisé en ce que**
lors de l'exploitation du spectre de fréquence Doppler (18-21) par l'électronique d'exploitation, on détermine si la surface du produit en vrac (4) s'est déplacée.

3. Procédé conforme à la revendication 2,
**caractérisé en ce que**
lors de l'exploitation du spectre de fréquence Doppler (18-21) par l'électronique d'exploitation on détermine à quelle vitesse la surface du produit en vrac s'est déplacée.

4. Procédé conforme à la revendication 1, 2 ou 3,
**caractérisé en ce que**
lors de l'exploitation du spectre de fréquence Doppler (18-21) par l'électronique d'exploitation on détermine si une introduction ou une évacuation de produit en vrac se produit.

5. Procédé conforme à l'une des revendications précédentes,
**caractérisé en ce qu'**
en fonction des résultats de l'exploitation du spectre de fréquence Doppler (18-21), lors de l'exploitation de la courbe d'écho (7, 10) par l'électronique d'exploitation, on intervient sur l'identification d'une structure dans la courbe d'écho (7, 10) à laquelle est associé l'état de remplissage.

6. Procédé conforme à la revendication 1,
**caractérisé en ce que**
la courbe d'écho (7-10) et le spectre de fréquence Doppler (18-21) sont établis simultanément.

7. Procédé conforme à la revendication 1,
**caractérisé en ce que**
la courbe d'écho (7-10) et le spectre de fréquence Doppler (18-21) sont établis avec des capteurs radar (13, 14, 15) différents.

8. Procédé conforme à l'une des revendications précédentes,
**caractérisé en ce que**
dans une introduction ou à une évacuation est monté un débitmètre dont la valeur de mesure est fournie à l'exploitation de signal dans le capteur radar en tant que grandeur d'entrée complémentaire.

9. Appareil de mesure d'état de remplissage comportant au moins un capteur radar (1, 13-15) et une électronique de commande et d'exploitation,
**caractérisé en ce que**
l'électronique de commande et d'exploitation est susceptible de permettre la mise en oeuvre du procédé conforme à l'une des revendications 1 à 8.
